# EUROPÄISCHE PATENTANMELDUNG

(11) **EP 4 234 165 A1**
(43) Veröffentlichungstag der Anmeldung: **30.08.2023**
(21) Anmeldenummer: 23154745.6
(22) Anmeldetag: 02.02.2023
(51) Int. Cl.: B25B 1/22, B25B 5/00, B23Q 1/00, B25B 11/00, B25H 1/00

(54) **AUFNAHMEVORRICHTUNG ZUM AUFNEHMEN EINES BELIEBIG GEFORMTEN OBJEKTS**

(30) Priorität: 08.02.2022 DE 102022201272
(71) Anmelder: ZF Friedrichshafen AG, 88046 Friedrichshafen (DE)
(72) Erfinder: Stuetzenberger, Siegbert, 88239 Wangen (DE)

(57) **Zusammenfassung**

Die Erfindung bezieht sich auf eine Aufnahmevorrichtung zum Aufnehmen eines beliebig geformten Objekts, mit einer waagrecht sich erstreckenden Grundplatte 1, auf der eine Mehrzahl von der Grundplatte 1 senkrecht nach oben hervorstehender Auflagemittel angeordnet sind, auf deren der Grundplatte 1 entgegengesetzten Enden das Objekt in einer Sollposition auflegbar ist. Eine Mehrzahl Gewindebohrungen 2 sind über die Grundplatte 1 verteilt in der Grundplatte 1 ausgebildet, in die an ihrem einen Ende die ein Gewinde aufweisenden Auflagemittel auf bestimmte Höhen von der Grundplatte 1 hervorstehend einschraubbar sind.

## Beschreibung

Die Erfindung bezieht sich auf eine Aufnahmevorrichtung zum Aufnehmen eines beliebig geformten Objekts, mit einer waagrecht sich erstreckenden Grundplatte, auf der eine Mehrzahl von der Grundplatte senkrecht nach oben hervorstehender Auflagemittel angeordnet sind, auf deren der Grundplatte entgegengesetzten Enden das Objekt in einer Sollposition auflegbar ist.

Derartige Aufnahmevorrichtungen dienen dazu das Objekt darauf abzustellen, um es zusammen mit der Aufnahmevorrichtung in eine Montageposition oder Demontageposition des Objekts zu bringen. Insbesondere kann dabei das Objekt ein Getriebe sein, das in ein Fahrzeug eingebaut oder aus einem Fahrzeug ausgebaut werden soll. Mittels einer Hebevorrichtung wird dabei die Aufnahmevorrichtung in die Montage- oder Demontageposition bewegt. Weist das Objekt empfindliche Bereiche wie z.B. eine aus Kunststoff bestehende Ölwanne oder eine tiefgezogene Stahlölwanne auf, so muss das Objekt an anderen Stellen als den empfindlichen Bereichen des Objekts aufliegen um Beschädigungen zu vermeiden. Diese Auflagemittel müssen genau platziert sein, um zu vermeiden, dass das Objekt nicht mit seinen empfindlichen Bereichen auf den Auflagemitteln aufliegt.

Aufgabe der Erfindung ist es eine Aufnahmevorrichtung zum Aufnehmen eines beliebig geformten Objekts der eingangs genannten Art zu schaffen, die einen einfachen Aufbau mit einer genauen Platzierung der Auflagemittel aufweist und die Anwendung bei unterschiedlichen Objekten ermöglicht.

Diese Aufgabe wird erfindungsgemäß dadurch gelöst, dass eine Mehrzahl Gewindebohrungen über die Grundplatte verteilt in der Grundplatte ausgebildet sind, in die an ihrem einen Ende die ein Gewinde aufweisenden Auflagemittel auf bestimmte Höhen von der Grundplatte hervorstehend einschraubbar sind.

Da die Gewindebohrungen sehr exakt platziert werden können, kommt es auch zu einer genauen Platzierung der Auflagemittel.

Weiterhin sind die Auflagemittel durch die Gewindeverbindung leicht entfernbar und durch andere Auflagemittel anderer von der Grundplatte hervorstehender Höhe austauschbar und/oder Auflagemittel in anderen, vorher nicht mit Auflagemitteln versehenen Gewindebohrungen anordenbar. Dadurch kann dieselbe Aufnahmevorrichtung so verändert werden, dass Objekte mit anderen Sollpositionen zur Auflage auf den Auflagemitteln der Aufnahmevorrichtung benutzt werden können.

Besonders einfach und kostengünstig ist es, wenn die Auflagemittel Auflagebolzen sind.

Dabei können alle oder ein Teil der Auflagebolzen an ihren der Grundplatte entgegengesetzten Endbereichen eine konische Verjüngung oder eine kugelartige Form aufweisen um scharfe Kanten zu vermeiden, durch die Beschädigungen am Objekt entstehen könnten.

Alle oder ein Teil der Auflagebolzen können an ihrer der Grundplatte entgegengesetzten Stirnfläche eine zentrische Vertiefung aufweisen.

Dies ermöglicht es, dass die Stellen des Objekts, die auf den Auflagebolzen aufliegen, in Bereichen von Schraubköpfen des Objekts liegen, die dann in die Vertiefungen hineinragen und so nicht die Schraubenköpfe sondern Stellen des Objekts auf den die Vertiefungen umschließenden Bereichen der Auflagebolzen aufliegen. Damit wird die tatsächliche Auflagehöhe der Auflagebolzen nicht durch die Schraubenköpfe verändert.

Ragen alle oder ein Teil der Auflagebolzen mit ihren Gewinden durch die Gewindebohrungen hindurch und weisen an ihrem nach unten ragenden freien Enden Handhaben zum Verdrehen der Auflagebolzen auf, so können die Höhen, mit denen die Auflagebolzen von der Grundplatte nach oben hervorstehen, eingestellt oder nachjustiert werden.

Dabei können die Auflagebolzen an ihren oberen Enden einen Auflageteller aufweisen.

Weisen die Auflagebolzen an ihren nach oben gerichteten Endbereichen einen reduzierten Durchmesser auf, so können sie in einem Bereich der Grundplatte angeordnet sein, der dem umlaufenden Rand des Objekts in seiner Sollposition entspricht und so beim Auflagen des Objekts auf die Aufnahmevorrichtung das Objekt mit ihrem reduzierten Durchmesser zur Sollposition hin voreinweist.

Kostengünstig ist es, wenn die Auflagebolzen Gewindebolzen sind.

Ebenfalls zu einer Vorausrichtung des auf die Aufnahmevorrichtung aufzulegenden Objekts dient es, wenn im umlaufenden Randbereich der Grundplatte ein oder mehrere Führungsstücke angeordnet sind, deren dem umlaufenden Rand der Grundplatte zugewandter der Grundplatte nähere Endbereich der radial umlaufenden Kontur des Objekts in diesem Bereich entspricht und dessen von der Grundplatte weg gerichteter Endbereich zum die Grundplatte radial umgebenden Bereich hin nach außen geneigt ist.

Sind im radial umlaufenden Randbereich der Grundplatte sich gegenüberliegend durchgehende Ausnehmungen ausgebildet, so kann zur Sicherung des Objekts während seiner Bewegung in die Montageposition oder aus der Montageposition in seiner Sollposition ein Zurrgurt durch die Ausnehmungen und um das Objekt gezogen werden.

Ist die Grundplatte mittels einer Verstelleinrichtung aus ihrer waagrechten Lage um einen Schwenkwinkel verschwenkbar, so kann bei einem Heben der Hebevorrichtung mit der Aufnahmevorrichtung und dem aufliegenden Objekt in die Montage- oder Senken aus der Demontageposition die Aufnahmevorrichtung in eine platzmäßig besser zu bewegende Position geschwenkt werden.

Ein Ausführungsbeispiel der Erfindung ist in der Zeichnung dargestellt und wird im Folgenden näher beschrieben. Es zeigen
- Figur 1: eine perspektivisch Frontansicht einer Aufnahmevorrichtung mit einer ersten Anordnung von Auflagebolzen
- Figur 2: eine Draufsicht der Aufnahmevorrichtung nach Figur 1
- Figur 3: eine Perspektivansicht der Aufnahmevorrichtung nach Figur 1
- Figur 4: eine perspektivisch Frontansicht einer Aufnahmevorrichtung nach Figur 1 mit einer zweiten Anordnung von Auflagebolzen
- Figur 5: eine Draufsicht der Aufnahmevorrichtung nach Figur 4
- Figur 6: eine Perspektivansicht der Aufnahmevorrichtung nach Figur 4
- Figur 7: eine perspektivisch Frontansicht einer Aufnahmevorrichtung mit einer dritten Anordnung von Auflagebolzen
- Figur 8: eine Draufsicht der Aufnahmevorrichtung nach Figur 7
- Figur 9: eine Perspektivansicht der Aufnahmevorrichtung nach Figur 7.

Die dargestellte Aufnahmevorrichtung dient dazu, dass ein nicht dargestelltes Getriebe von oben darauf auflegbar ist um das Getriebe von unten in eine Montageposition in einem Kraftfahrzeug anzuheben oder um ein Getriebe beim seinem Ausbau aus seiner Montageposition abzusenken. Dazu wird die Aufnahmevorrichtung von einer nicht dargestellten insbesondere hydraulischen Hebevorrichtung angehoben bzw. abgesenkt.

Die Aufnahmevorrichtung weist eine etwa rechteckige Grundplatte 1 auf, auf der über die Fläche der Grundplatte 1 verteilt eine Mehrzahl Gewindebohrungen 2 ausgebildet sind.

In die Gewindebohrungen 2 sind Auflagebolzen 3, 3', 3", 3‴, 3"" mit ihren einen ein Gewinde aufweisenden Enden so eingeschraubt, dass die Auflagebolzen auf jeweils bestimmte Höhen von der Grundplatte 1 nach oben hervorstehen.

Ein Teil der Auflagebolzen 3 besitzt eine über seine gesamte Stirnseite an seinem oberen Ende eine Auflagefläche.

Ein anderer Teil der Auflagebolzen 3' weist an ihren von der Grundplatte 1 weg gerichteten Enden konische Verjüngungen 4 auf.

Ein weiterer Teil der Auflagebolzen 3" sind an ihren von der Grundplatte 1 weg gerichteten Enden mit zentrischen Vertiefungen 5 runden Querschnitts versehen, die als Grundbohrungen begrenzter Tiefe ausgebildet sind.

Weiterhin sind im Randbereich der Grundplatte sich etwa diagonal in Eckbereichen der Grundplatte 1 gegenüberliegend zwei Auflagebolzen 3‴ angeordnet, die an ihren von der Grundplatte 1 weg gerichteten Enden 6 einen reduzierten Durchmesser aufweisen.

Die Auflagebolzen 3‴ sind als Gewindebolzen ausgebildet und ragen durch die Grundplatte 1 hindurch nach unten. An den nach unten ragenden Enden der Auflagebolzen 3‴ sind Handhaben 7 angeordnet, mittels derer eine Bedienperson die Auflagebolzen 3‴ verdrehen und so die von der Grundplatte 1 nach oben ragende Höhe der Auflagebolzen 3‴ einstellen zu können.

Um eine einstellte Höhe der Auflagebolzen 3‴ fixieren zu können, ist eine Kontermutter 8 auf das Gewinde der Auflagebolzen 3‴ bis zur Anlage an der Grundplatte 1 aufgeschraubt.

In einem weiteren Eckbereich der Grundplatte 1 ist ein weiterer als Gewindebolzen ausgebildeter Auflagebolzen 3"" angeordnet, der ebenfalls durch die Grundplatte 1 nach unten ragt und an seinem unteren Ende mit einer Handhabe 7' versehen ist, mittels derer eine Bedienperson den Haltebolzen 3"" verdrehen und so die von der Grundplatte 1 nach oben ragende Höhe des Auflagebolzens 3"" einstellen kann.

Um eine einstellte Höhe des Auflagebolzens 3"" fixieren zu können, ist eine Kontermutter 8 auf das Gewinde des Auflagebolzens 3"" bis zur Anlage an der Grundplatte 1 aufgeschraubt.

Der Auflagebolzen 3"" weist an seinem oberen Ende einen Auflageteller 9 auf.

Im umlaufenden Randbereich der Grundplatte 1 ist ein Führungsstück 10 angeordnet. Der der Grundplatte 1 nähere Bereich 11 des Führungsstücks 10 ragt senkrecht nach oben und geht dann in einen Bereich 12 über, der nach außen geneigt ist.

An den sich gegenüberliegenden Längsseiten der Grundplatte sind sich gegenüberliegend zwei als durchgehende Langlöcher ausgebildete Ausnehmungen 13 ausgebildet.

Durch diese kann ein nicht dargestellter Zurrgurt gezogen werden, der ein auf der Aufnahmevorrichtung liegendes Getriebe umschließt und somit in seiner Position sichert.

Unter der Grundplatte 1 ist eine Verstelleinrichtung 14 angeordnet, mittels derer die Grundplatte 1 aus einer waagrechten Lage in eine um einen Schwenkwinkel geneigte Lage verschwenkbar ist.

Die Verstelleinrichtung 14 weist einen in seinem einen Endbereich an der Unterseite der Grundplatte 1 um eine zur Grundplatte 1 parallele Schwenkachse 15 angelenkten Schwenkhebel 16 auf.

An seinem der Schwenkachse 15 entgegengesetzten Endbereich ist an dem Schwenkhebel 16 eine Handhabe 17 zum Verschwenken des Schwenkhebels 16 um z.B. 6° angeordnet.

Wird ein Getriebe mit einer Ölwanne auf der Unterseite auf die Aufnahmeeinrichtung aufgelegt, so sind nur Auflagebolzen 3, 3', 3" 3‴, 3"" an Stellen der Grundplatte 1 angeordnet, an denen die Auflagebolzen 3, 3', 3" 3‴, 3"" an Bereichen des Getriebegehäuses anliegen. Die Aufnahmebolzen 3' liegen insbesondere im Bereich der Ölwanne an, da sie diese durch ihre konischen Verjüngungen 4 nicht beschädigen können.

Bei den Aufnahmebolzen 3" können an dem Getriebe vorhandene Schraubenköpfe in die Vertiefungen 5 eintauchen, so dass eine korrekte Abstützung des Getriebes an der Stirnseite der Aufnahmebolzen 3" erfolgt.

Beim Aufsetzen des Getriebes auf die Aufnahmevorrichtung erfolgt an dem Führungsstück 10 eine Vorausrichtung und an den reduzierten Enden 6 der Aufnahmebolzen 3‴ eine korrekte Endausrichtung des Getriebes so dass dieses in korrekter Sollposition auf den Auflagebolzen 3, 3', 3", 3‴ aufliegt.

Um nun beim Anheben der mit dem Getriebe versehenen Aufnahmevorrichtung in die Montageposition des Kraftfahrzeugs das Getriebe in seiner korrekten Lage zu halten, kann ein das Getriebe umschließender Zurrgurt durch die Ausnehmungen 13 gezogen und festgezurrt werden.

Wenn die Platzverhältnisse am Kraftfahrzeug es erfordern, kann vor dem Anheben der Aufnahmevorrichtung diese durch die Verstelleinrichtung 14 geschwenkt werden und so sicherer in die Montageposition angehoben werden um dort wieder in seine Sollposition zurückgeschwenkt und am Kraftfahrzeug verbaut zu werden.

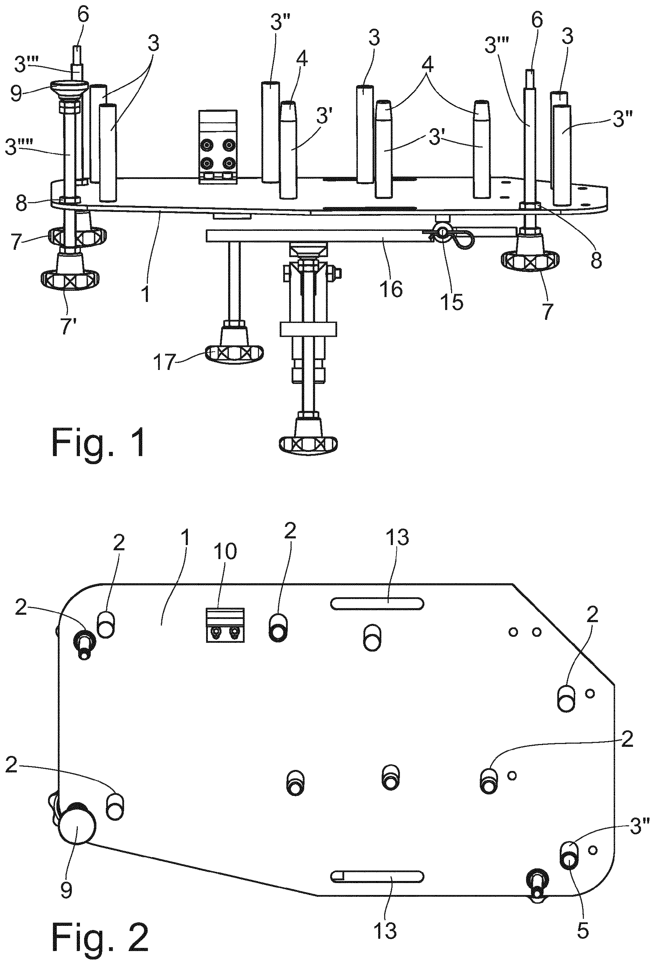

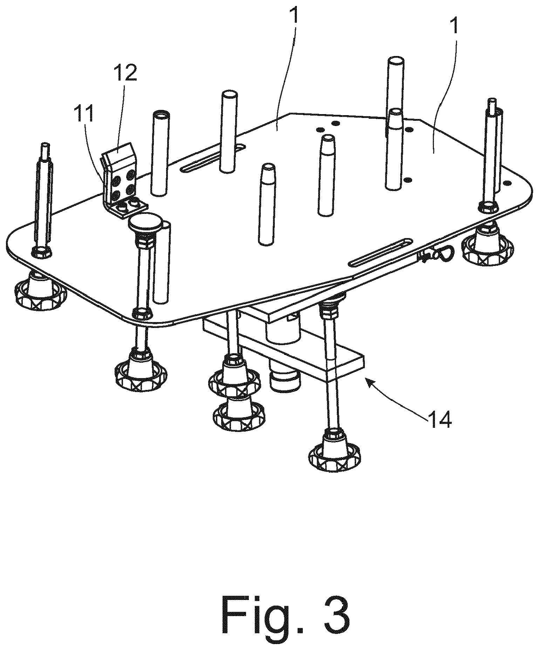

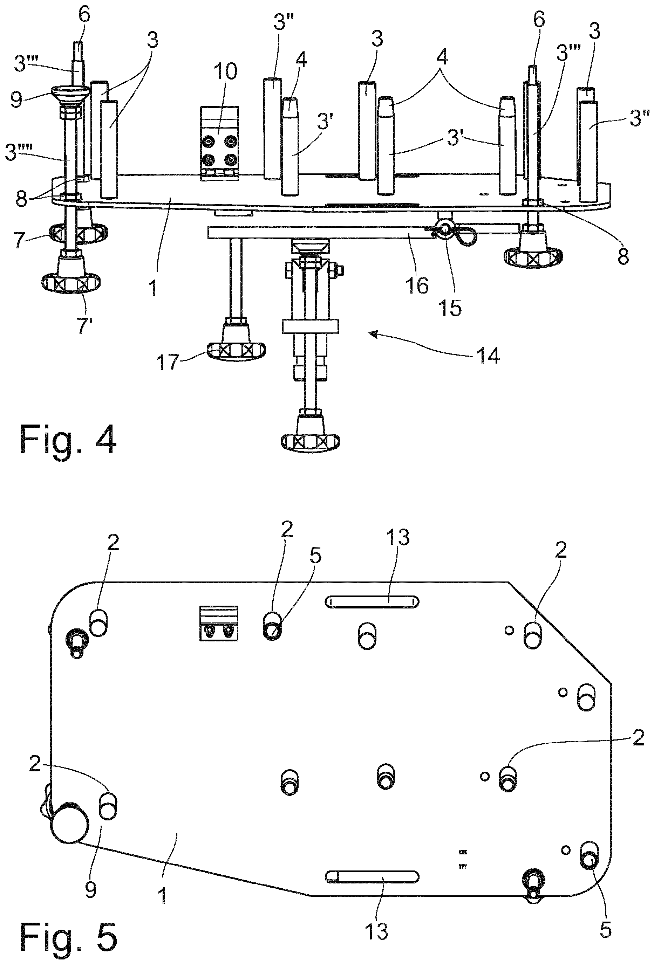

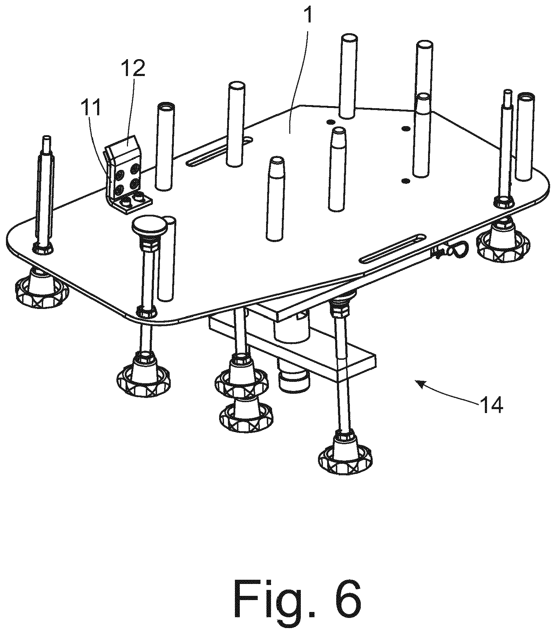

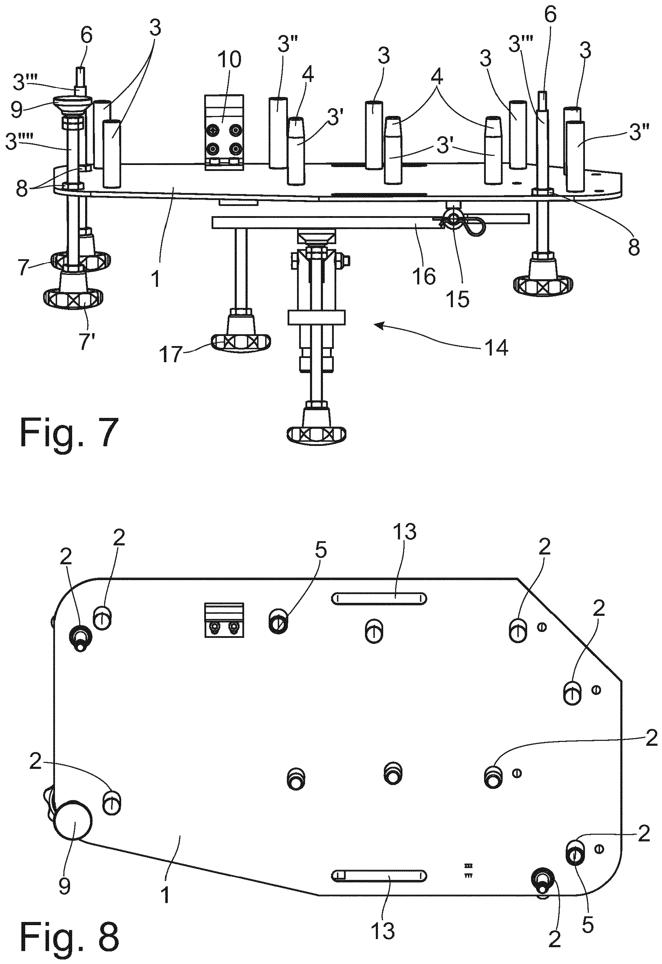

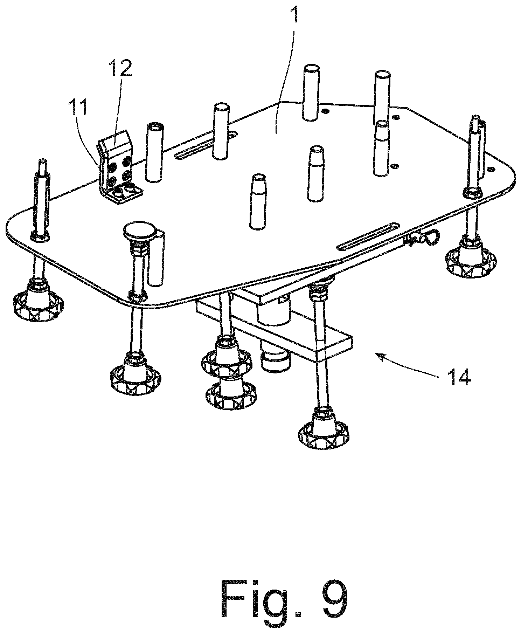

Da die Auflagebolzen 3, 3', 3", 3‴ bei den drei Ausführungen der Figuren 1 bis 3, 4 bis 6 und 7 bis 9 mit unterschiedlichen Höhen ausgebildet sind, können Getriebe mit unterschiedlich struktuierten Unterseiten bei ansonsten gleicher Aufnahmevorrichtung verarbeitet werden. Es müssen nur Auflagebolzen 3, 3', 3", 3‴ an der Grundplatte 1 angeordnet werden, die in ihrer Position und ihrer Höhe der Unterseite des jeweils zu verarbeitenden Getriebes entsprechen.

### Bezugszeichen

- 1: Grundplatte
- 2: Gewindebohrungen
- 3: Aufnahmebolzen
- 3': Aufnahmebolzen
- 3": Aufnahmebolzen
- 3‴: Aufnahmebolzen
- 3"": Aufnahmebolzen
- 4: konische Verjüngungen
- 5: Vertiefungen
- 6: reduzierte Enden
- 7: Handhabe
- 7': Handhabe
- 8: Kontermutter
- 9: Auflageteller
- 10: Führungsstück
- 11: Bereich
- 12: Bereich
- 13: Ausnehmungen
- 14: Verstelleinrichtung
- 15: Schwenkachse
- 16: Schwenkhebel
- 17: Handhabe
- 31: erster Antriebsflansch

## Patentansprüche

1. Aufnahmevorrichtung zum Aufnehmen eines beliebig geformten Objekts, mit einer waagrecht sich erstreckenden Grundplatte (1), auf der eine Mehrzahl von der Grundplatte (1) senkrecht nach oben hervorstehender Auflagemittel angeordnet sind, auf deren der Grundplatte (1) entgegengesetzten Enden das Objekt in einer Sollposition auflegbar ist, **dadurch gekennzeichnet, dass** eine Mehrzahl Gewindebohrungen (2) über die Grundplatte (1) verteilt in der Grundplatte (1) ausgebildet sind, in die an ihrem einen Ende die ein Gewinde aufweisenden Auflagemittel auf bestimmte Höhen von der Grundplatte (1) hervorstehend einschraubbar sind.

2. Aufnahmevorrichtung nach Anspruch 1, **dadurch gekennzeichnet, dass** die Auflagemittel Auflagebolzen (3, 3', 3", 3‴, 3"") sind.

3. Aufnahmevorrichtung nach Anspruch 2, **dadurch gekennzeichnet, dass** alle oder ein Teil der Auflagebolzen (3') an ihren der Grundplatte (1) entgegengesetzten Endbereichen eine konische Verjüngung (4) oder eine kugelartige Form aufweisen.

4. Aufnahmevorrichtung nach Anspruch 2, **dadurch gekennzeichnet, dass** alle oder ein Teil der Auflagebolzen (3") an ihrer der Grundplatte (1) entgegengesetzten Stirnfläche eine zentrische Vertiefung (5) aufweisen.

5. Aufnahmevorrichtung nach einem der vorhergehenden Ansprüche, **dadurch gekennzeichnet, dass** alle oder ein Teil der Auflagebolzen (3‴, 3"") mit ihren Gewinden durch die Gewindebohrungen (2) hindurchragen und an ihrem nach unten ragenden freien Enden Handhaben (7, 7') zum Verdrehen der Auflagebolzen (3‴, 3"") aufweisen.

6. Aufnahmevorrichtung nach Anspruch 5, **dadurch gekennzeichnet, dass** der oder die Auflagebolzen (3"") an ihren oberen Ende einen Auflageteller (9) aufweisen.

7. Aufnahmevorrichtung nach Anspruch 5, **dadurch gekennzeichnet, dass** die Auflagebolzen (3‴) an ihren nach oben gerichteten Endbereichen (6) einen reduzierten Durchmesser aufweisen.

8. Aufnahmevorrichtung nach einem der Ansprüche 5 bis 7, **dadurch gekennzeichnet, dass** die Auflagebolzen (3‴, 3"") Gewindebolzen sind.

9. Aufnahmevorrichtung nach einem der vorhergehenden Ansprüche, **dadurch gekennzeichnet, dass** im umlaufenden Randbereich der Grundplatte (1) ein oder mehrere Führungsstücke (10) angeordnet sind, deren dem umlaufenden Rand der Grundplatte (1) abgewandter, zur Grundplatte (1) gerichteter Endbereich (11) der radial umlaufenden Kontur des Objekts in diesem Bereich entspricht und dessen von der Grundplatte (1) weggerichteter Endbereich (12) zum die Grundplatte (1) radial umgebenden Bereich hin nach außen geneigt ist.

10. Aufnahmevorrichtung nach einem der vorhergehenden Ansprüche, **dadurch gekennzeichnet, dass** im radial umlaufenden Randbereich der Grundplatte (1) sich gegenüberliegend durchgehende Ausnehmungen (13) ausgebildet sind.

11. Aufnahmevorrichtung nach einem der vorhergehenden Ansprüche, **dadurch gekennzeichnet, dass** die Grundplatte (1) mittels einer Verstelleinrichtung (14) aus ihrer waagrechten Lage um einen Schwenkwinkel verschwenkbar ist.
